# EUROPÄISCHE PATENTANMELDUNG

(11) **EP 1 461 992 A1**
(43) Veröffentlichungstag der Anmeldung: **29.09.2004**
(21) Anmeldenummer: 04100397.1
(22) Anmeldetag: 04.02.2004
(51) Int. Cl.: A01D 63/04

(54) **Halmteiler**

(30) Priorität: 05.02.2003 DE 10304498
(71) Anmelder: DEERE & COMPANY, Moline, Illinois 61265-8098 (US)
(72) Erfinder: Weichholdt, Dirk, 57200, Sarreguemines (FR); Droll, Peter, 77839, Lichtenau (DE); Georgel, Pascal, 57410, Rahling (DE)
(74) Vertreter: Holst, Sönke, Dr.

(57) **Zusammenfassung**

Die Erfindung bezieht sich auf einen Halmteiler (20) für eine Erntegutbergungsvorrichtung (10), mit einem Abweiser (30), der mittels eines Gelenks (22), das zwei zueinander bewegliche Gelenkelemente (42, 46) aufweist, um eine Schwenkachse (24) verschwenkbar ist.

Um einen Halmteiler (20) bereitzustellen, der in der Betriebsstellung möglichst wenig Spiel aufweist, an dem sich aber auch nur wenig Getreidehalme verfangen können, wird vorgeschlagen, dass eine Arretierungseinrichtung eine in Richtung der Schwenkachse (24) wirkende Kraft auf die Gelenkelemente (42, 46) ausübt.

Außerdem wird vorgeschlagen, dass die Gelenkelemente (42, 46) mit zusammenwirkenden Positionsvorgabeelementen versehen sind, die das Gelenk (22) in eine Position vorspannen, aus der es manuell verschwenkbar ist, wobei die Positionsvorgabeelemente zwischen den Gelenkelementen (42, 46) angeordnet sind.

## Beschreibung

Die Erfindung betrifft einen Halmteiler für eine Erntegutbergungsvorrichtung, mit einem Abweiser, der mittels eines Gelenks, das zwei zueinander bewegliche Gelenkelemente aufweist und durch eine Arretierungseinrichtung arretierbar ist, um eine Schwenkachse verschwenkbar ist.

In der DE 1 926 441 A wird ein Halmteiler beschrieben, der durch ein Gelenk schwenkbar an einem Schneidwerk angebracht ist. Zur Arretierung wird ein federvorgespannter Keil zwischen den schneidwerksfesten und den verschwenkenden Teil des Halmteilerträgerrohrs geschoben. Bei einer anderen Ausführungsform wird der Keil an die einschwenkende Seite des Gelenks geschoben.

Die DD 128 878 A zeigt einen anderen Halmteiler. Er wird in seiner Arbeitsstellung im Abstand vom Gelenk durch eine Hülse, die auf einen ortsfesten Stift geschoben wird, arretiert.

In einem Prospekt "Vorsprung 2002 - Superkonditionen im Goldenen Oktober" der Fa. New Holland ist ein Mähdrescher der Baureihe CX 880 fotografisch wiedergegeben. An der Seite des Schneidwerks ist ein Halmteiler mittels eines Gelenks schwenkbar befestigt. An der Außenseite des Gelenks ist ein Spannhebel angeordnet, der die aneinander schwenkbar gelagerten Elemente des Gelenks in der Betriebsstellung festsetzt, indem er sie aneinander festzieht. In die Transportposition wird das Gelenk durch eine an seiner Oberseite angeordnete Schraubenfeder gezogen.

Die nachveröffentlichte DE 101 46 768 A schlägt einen Halmteiler vor, der über ein schwenkbares Gelenk am Schneidwerk eines Mähdreschers befestigt ist. Zur Arretierung dient ein verschiebbares Sperrelement, das innerhalb eines den Halmteiler haltenden Rohrs gelagert ist und durch Federkraft in eine Rastausnehmung im gegenüber dem verschiebbaren Element verschwenkbaren Teil des Halmteilers gedrückt wird. Es ist ein Schlitz im Rohr vorgesehen, durch den das Sperrelement sich erstreckt, so dass es manuell gegen die Kraft der Feder aus der Rastausnehmung gezogen werden kann, um den Halmteiler verschwenken zu können.

Im Stand der Technik ist es somit bekannt, den Halmteiler durch Elemente zu arretieren, die seitlich über das Halmteilerrohr hinausragen und die Gelenkelemente form- oder kraftschlüssig aneinander fixieren. An diesen seitlich überstehenden Elementen können sich Getreidehalme verfangen, was zu Verstopfungen führen kann. Wenn diese Verstopfungen auftreten, kommt es zum so genannten Schieben des Schneidwerks, was bedeutet, dass der Halmteiler nicht mehr seine Funktion erfüllt, sondern nur noch die Halme nach unten und/oder vorn drückt, so dass Verluste entstehen. Nur die DE 101 46 768 A offenbart ein Gelenk mit einem relativ schmalen Profil. Dort ist jedoch eine relativ aufwändige Mechanik zur Arretierung des Gelenks vorgesehen.

Das der Erfindung zu Grunde liegende Problem wird darin gesehen, einen verbesserten schwenkbaren Halmteiler zu schaffen, an dem sich möglichst wenig Getreidehalme verfangen.

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Es wird vorgeschlagen, das Gelenk des Halmteilers durch eine Arretierungseinrichtung festzusetzen, die eine in der Richtung der Schwenkachse verlaufende Kraft ausübt. Die beiden zueinander beweglichen Gelenkelemente des Gelenks werden somit gegeneinander gedrückt oder zusammengequetscht, so dass sie aneinander lösbar fixiert werden.

Auf diese Weise erreicht man, dass es ausreicht, wenn Elemente der Arretierungseinrichtung nur an beiden Enden der Schwenkachse angeordnet sind. Da letztere sich in der Regel zumindest näherungsweise vertikal erstreckt, sind keine seitlich über das Gelenk überstehenden Elemente, an denen sich Erntegut verfangen könnte, mehr erforderlich.

Die Arretierungseinrichtung kann grundsätzlich beliebig gestaltet werden. So könnte sie eine Klemmschraube umfassen, die zur Arretierung angezogen wird und gelöst wird, um den Halmteiler verschwenken zu können. Aus Gründen einer einfacheren Bedienbarkeit ist jedoch ein an sich bekannter Exzenterhebel bevorzugt. Er umfasst einen sich durch die Gelenkelemente erstreckenden Bolzen oder dgl., der einen Endes mit dem Exzenterhebel und anderen Endes mit einem Gelenkelement mechanisch verbunden ist. Der Exzenterhebel ermöglicht es, die beiden Gelenkelemente gegeneinander zu bewegen, um sie zu arretieren. Vorzugsweise ist in dem Kraftfluss des Exzenterhebels eine Feder vorgesehen, die eine definierte Kraft erzeugt, mit der die Gelenkelemente gegeneinander gedrückt werden.

Um eine unerwünschte Ansammlung von Erntegut am Exzenterhebel zu vermeiden, ist eine Ausführungsform bevorzugt, bei der sich der Exzenterhebel oberhalb des Gelenks und von der Schwenkachse entgegengesetzt der Fahrtrichtung der Erntegutbergungsvorrichtung nach hinten erstreckt, wenn der Exzenterhebel das Gelenk in der Betriebsstellung arretiert.

Alternativ oder zusätzlich zur Lehre des Anspruchs 1 wird vorgeschlagen, die Gelenkelemente mit zusammenwirkenden, das Gelenk in eine Position vorspannenden Positionsvorgabeelementen zu versehen. Die Positionsvorgabeelemente können das Gelenk z. B. in die Betriebs- und/oder Transportposition vorspannen, so dass der Halmteiler in der jeweiligen Position verbleibt, solange keine externen Kräfte auf ihn wirken. Durch die Positionsvorgabeelemente wird das Gelenk somit nicht arretiert, aber in einer Position festgehalten, in der es arretiert werden kann. Dem Bediener wird dadurch ein genaues Ausrichten des Halmteilers vor dem Arretieren erleichtert. Das nicht-arretierte Gelenk kann manuell oder auf andere Weise, z. B. durch einen Motor, gegen die Wirkung der Positionsvorgabeelemente in eine andere Position verbracht werden. Es wird empfohlen, die Positionsvorgabeelemente zwischen den Gelenkelementen anzuordnen. Dadurch sind sie in einer relativ geschützten Lage angeordnet und man erhält ein kompaktes Gelenk, an dem sich nur wenig Erntegut verfangen kann.

Es wäre grundsätzlich denkbar, die Positionsvorgabeelemente im Abstand von der Schwenkachse zwischen einer Stirnseite eines Gelenkelements und dem anderen Gelenkelement anzuordnen. Bei einer derartigen Ausführungsform könnte jedoch die Arretierung in der Transportposition, in der das Gelenk in der Regel um 90° abgewinkelt ist, problematisch realisierbar sein. Es wird daher vorgeschlagen, die Positionsvorgabeelemente an den sich quer zur Schwenkachse erstreckenden Flächen der Gelenkelemente anzuordnen, an der auch die Gelenkelemente aneinander anliegen. Man erreicht auf diese Weise eine kompakte und geschützte Anordnung der Positionsvorgabeelemente.

Die Positionsvorgabeelemente können beliebige Mittel umfassen, um die Gelenkelemente in eine Position vorzuspannen. So wären Federn verwendbar. In einer bevorzugten Ausführungsform ist eines der Gelenkelemente mit einer Erhebung und das andere Gelenkelement mit einer Vertiefung versehen, in die die Erhebung hineinpasst. Bei geeigneter Anordnung der Schwenkachse und der Gelenkelemente verbringt die Schwerkraft die Erhebung in die Vertiefung, so dass sich die gewünschte Vorspannwirkung einstellt. Anzumerken ist, dass zusätzlich bzw. alternativ zur Wirkung der Schwerkraft eine Feder die Gelenkelemente gegeneinander vorspannen kann, um die Erhebung in die Vertiefung zu bewegen.

Der Halmteiler ist in der Regel in verschiedene Positionen verbringbar, insbesondere eine Betriebsposition und eine Transportposition. Es ist daher sinnvoll, für beide Positionen Positionsvorgabeelemente vorzusehen. Eine Erhebung kann somit in eine von zwei (oder noch mehr) Vertiefungen eingebracht werden. Durch eine geeignete Anordnung der Positionsvorgabeelemente kann man ein Gelenk mit zwei identischen Gelenkelementen ausstatten, und vorzugsweise auch erreichen, dass die identischen Gelenkelemente an beiden Seiten einer Erntegutbergungsvorrichtung verwendbar sind.

Ein wesentlicher Vorzug der Positionsvorgabeelemente besteht darin, dass sie bei einem arretierten Gelenk eine Bewegung des Gelenks um die Schwenkachse unterbinden, da sie es dann mechanisch blockieren. Wenn die Gelenkelemente durch die Arretierungseinrichtung gegeneinander gedrückt werden, also einen gewissen Abstand voneinander unterschreiten, können die Positionsvorgabeelemente nicht mehr außer Eingriff gebracht werden. Dadurch erreicht man, dass keine großen Kräfte zum Arretieren erforderlich sind, jedoch eine spielarme Arretierung des Gelenks erzielt wird.

Der erfindungsgemäße Halmteiler kann an allen Arten von Erntegutbergungsvorrichtungen verwendet werden, wie Mähvorsätzen, Maisgebissen oder Pflückern. Der Erntebergungsvorsatz kann insbesondere an Erntemaschinen, wie Mähdreschern und Feldhäckslern verwendet werden. Das Gelenk mit dem Rastelement kann auch als separates Element geliefert und an separate oder bereits vorhandene Halmteiler montiert werden.

In den Zeichnungen ist ein nachfolgend näher beschriebenes Ausführungsbeispiel der Erfindung dargestellt. Es zeigt:
- Fig. 1: eine Seitenansicht einer Erntegutbergungsvorrichtung für einen Mähdrescher mit einem Halmteiler in Betriebsposition,
- Fig. 2: eine perspektivische seitliche Ansicht des in der Betriebsposition verriegelten Gelenks,
- Fig. 3: eine perspektivische Ansicht des in der Transportposition verriegelten Gelenks,
- Fig. 4: eine Explosionszeichnung des Gelenks, und
- Fig. 5: eine vergrößerte Ansicht eines Gelenkelements des Gelenks.

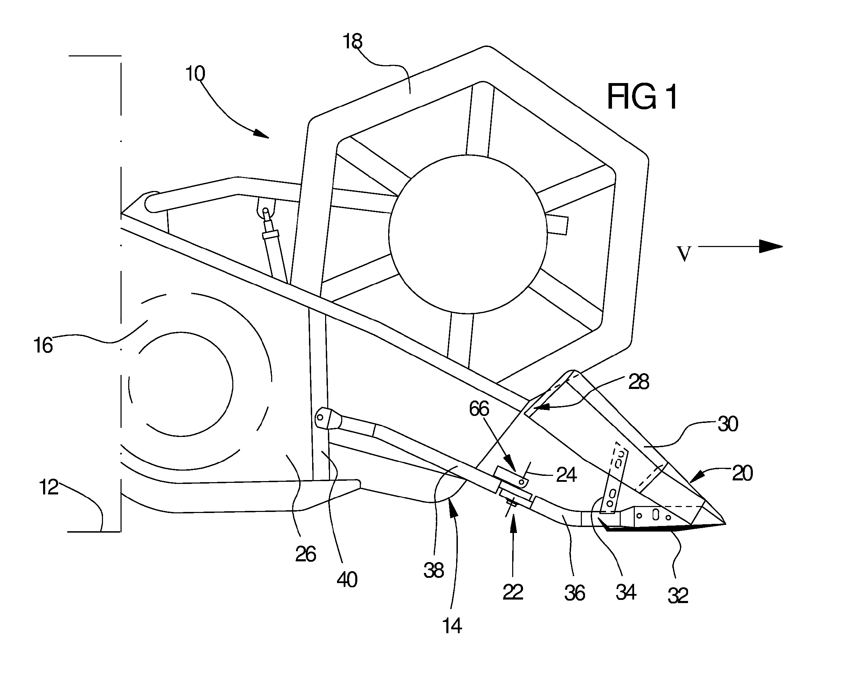

In der Figur 1 ist eine Erntegutbergungsvorrichtung 10 in Form eines Schneidwerks für einen nicht dargestellten Mähdrescher wiedergegeben, die an der Frontseite des schematisch dargestellten Schrägförderers 12 anbringbar ist. Die Erntegutbergungsvorrichtung 10 weist in an sich bekannter Weise eine querliegende Schneideinrichtung 14 auf, die aus einem Mähtisch und einem Mähbalken gebildet ist. Der Schneideinrichtung 14 ist ein Einzugsförderer 16, in der dargestellten Ausführungsform eine Querförderschnecke, zugeordnet und eine Haspel 18 mit Zinken vorgelagert. Weiterhin ist der Erntegutbergungsvorrichtung 10 ein seitlicher Halmteiler 20 vorgelagert, der in seiner Betriebsposition in Vorwärtsbewegungsrichtung V des Mähdreschers zeigt und nach vorn von der Erntegutbergungsvorrichtung 10 absteht. In der Regel sind zwei symmetrische Halmteiler 20 an beiden Seiten der Erntegutbergungsvorrichtung 10 angeordnet. An beiden Seiten der Erntegutbergungsvorrichtung 10 sind außerdem Seitenwände 26 vorgesehen, die etwa dreiecksförmig ausgebildete Frontbereiche mit Spitzen 28 aufweisen. Anzumerken ist, dass sich im Folgenden Richtungsangaben, wie vor, hinter, über, unter, seitlich, etc. auf die Vorwärtsbewegungsrichtung V beziehen.

Der Halmteiler 20 setzt sich aus einem Abweiser 30, einem Bodenblech 32, einer Stütze 34 und einem ersten Rohr 36 zusammen, das über ein Gelenk 22 an einem zweiten Rohr 38 befestigt ist, das seinerseits an einer Strebe 40 angebracht ist, die an der Seitenwand 26 der Erntegutbergungsvorrichtung 10 befestigt ist. Der schalenförmige, mit einem Querschnitt in der Form eines umgedrehten, auf dem Kopf stehenden U versehene Abweiser 30 wird durch die Stütze 34 in seiner schräg nach oben und entgegen der Vorwärtsbewegungsrichtung V weisenden Position gegenüber dem ersten Rohr 36 fixiert. Die Stütze 34 ist am ersten Rohr 36 angeschweißt. Auch das (zum Gleiten auf dem Erdboden eingerichtete) Bodenblech 32 ist an der flachgepressten Vorderseite des ersten Rohrs 36 angebracht. Der Halmteiler 20 dient zur Abtrennung einer Bahn geernteten Gutes von der benachbarten, noch nicht geernteten Bahn. Daher ist der Abweiser 30 in seinem in Vorwärtsbewegungsrichtung V vorderen Bereich spitz geformt.

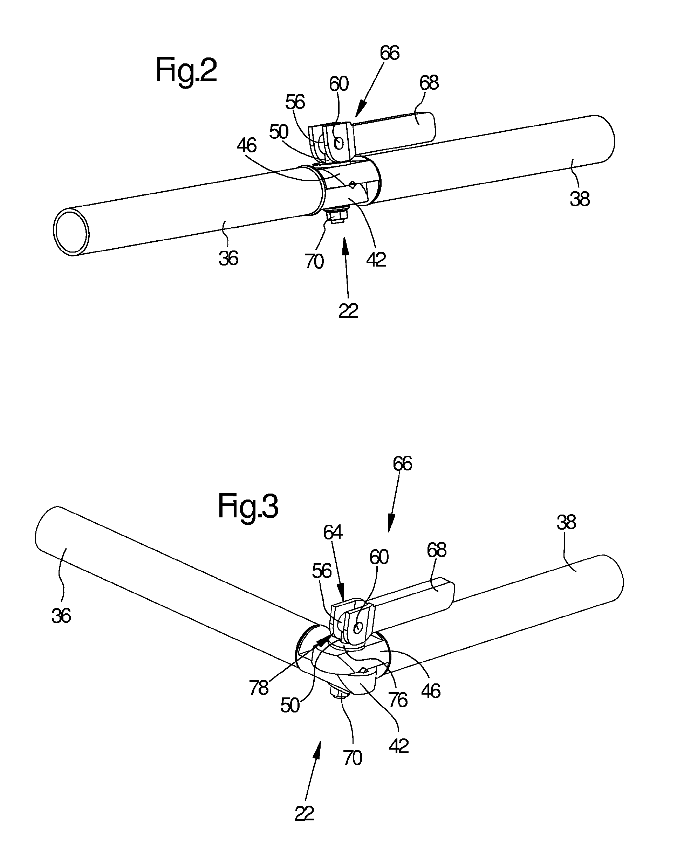

Das Gelenk 22 und das den Halmteiler 20 halternde erste Rohr 36 sind in den Figuren 1 und 2 in der Betriebsposition wiedergegeben und in der Figur 3 in einer Transportstellung, in der der Abweiser 30 mittels des Gelenks 22 um eine Schwenkachse 24 um etwa 90° in Richtung auf die Mitte der Erntegutbergungsvorrichtung 10 zu nach innen eingeschwenkt ist. Die Schwenkachse 24 des Gelenks 22 verläuft nicht genau vertikal, sondern, wie in Figur 1 erkennbar, gegenüber der Vertikalen in Vorwärtsbewegungsrichtung V nach vorn (bezüglich der Zeichnungen im Gegenuhrzeigersinn) geneigt. In seitlicher Richtung betrachtet ist die Schwenkachse 24 senkrecht, obwohl sie auch seitlich geneigt sein könnte.

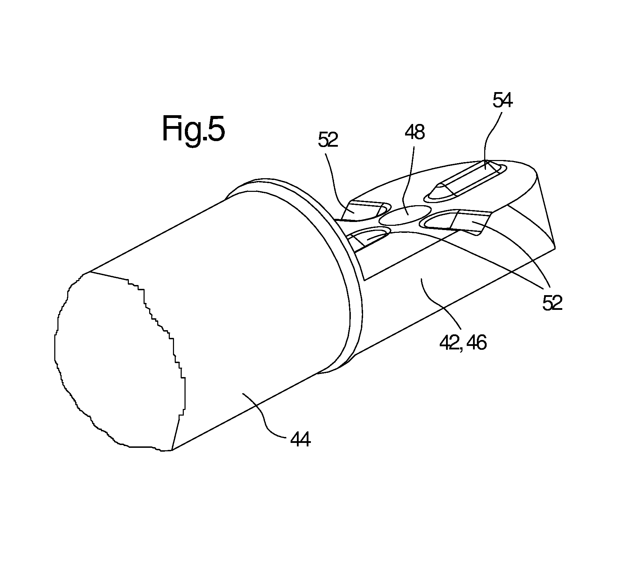

Der Aufbau des Gelenks 22 ist in den Figuren 2 bis 5 detaillierter dargestellt. Das Gelenk 22 umfasst ein erstes Gelenkelement 42, das mit dem ersten Rohr 36 verbunden ist. Dazu dient ein zylindrischer Ansatz 44 (s. Figur 5), der axial in das erste Rohr 36 eingeschoben wird und z. B. durch eine Schraub-, Niet-, Löt-, Kleb-, Schweiß- und/oder Aufschrumpfverbindung daran lösbar oder unlösbar befestigt ist. Das Gelenk 22 umfasst weiterhin ein zweites Gelenkelement 46, das ebenfalls einen - in den Figuren nicht erkennbaren, da in das zweite Rohr 38 eingeschobenen - Ansatz aufweist, der analog zu der Befestigung des Ansatzes 44 im ersten Rohr 36 mit dem zweiten Rohr 38 verbunden ist.

Die Gelenkelemente 42, 46 sind zueinander identisch gestaltet und spiegelbildlich angeordnet. Die Gelenkelemente 42, 46 haben die Form in der Längsmittelebene halbierter Zylinder und weisen eine mittige Bohrung 48 auf, die mit der Schwenkachse 24 zusammenfällt und durch die sich ein Bolzen 50 erstreckt. Die aneinander zum Anliegen kommenden Flächen der Gelenkelemente 42, 46 sind näherungsweise plan, jedoch in der Umgebung der Bohrung 48 mit drei um jeweils 90° zueinander versetzten Vertiefungen 52 und einer Erhebung 54 versehen, die vom Rohr 36 oder 38, an dem das Gelenkelement 42 oder 46 befestigt ist, abgewandt ist. Die Erhebung 54 und die Vertiefungen 52 erstrecken sich sternförmig radial von der Bohrung 48 fort.

Die Anordnung der Erhebung 54 und der Vertiefungen 52 ermöglicht es, die Gelenkelemente 42, 46 derart aufeinander zu setzen, dass sie eine gerade Linie bilden - Betriebsposition -, oder in einem Winkel von 90° zueinander anzuordnen - Transport -position -, wobei die Erhebung 54 jeweils n einer Vertiefung 52 angeordnet ist. Dadurch wird eine Vorspannung der Gelenkelemente 42, 46 in die genannten Positionen möglich, welche ein genaues Ausrichten des Halmteilers 20 erleichtert. Die Verwendung der drei Vertiefungen 52 ermöglicht es, gleichartige Gelenkelemente 42, 46 für Halmteiler 22 an beiden Seiten der Erntegutbergungsvorrichtung 10 zu verwenden.

Der Bolzen 50 weist einen Kopf 56 auf, durch den sich eine quer zur Längsachse des Bolzens 50 erstreckende Öffnung 58 erstreckt. Durch die Öffnung 58 wird ein Stift 60 gesteckt, der sich außerdem durch Öffnungen 62 in den beiden Schenkeln eines Gabelkopfs 64 eines Exzenterhebels 66 erstreckt. Der Exzenterhebel 66 weist weiterhin einen mit dem Gabelkopf 64 verbundenen Handgriff 68 auf. An seinem dem Kopf 56 abgewandten Ende ist der Bolzen 50 mit einem Gewinde versehen, auf das im zusammengesetzten Zustand des Gelenks 22 eine Mutter 70 geschraubt ist. Zwischen der Mutter 70 und dem Gelenkelement 42 sind eine erste Tellerfeder 72 und zweite Tellerfeder 74 übereinander angeordnet, während zwischen dem anderen Gelenkelement 46 und dem Gabelkopf 64 eine weitere Unterlegscheibe 76 angeordnet ist. Die äußeren Ränder der Tellerfedern 72, 74 liegen aneinander an, um eine optimale Federwirkung zu erhalten.

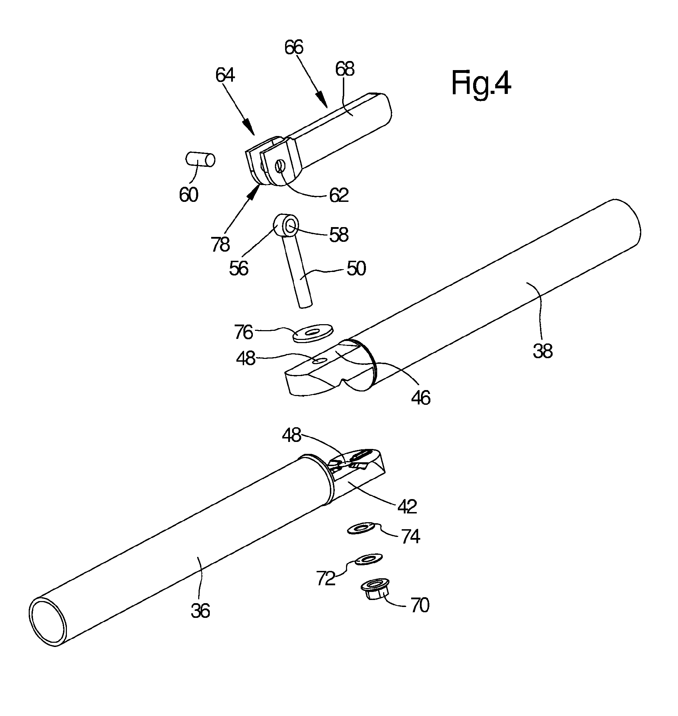

Die an der Unterlegscheibe 76 zum Anliegen kommende Fläche 78 des Gabelkopfs 64 bildet gegenüber der Öffnung 62 einen Exzenter. Der Abstand zwischen der Öffnung 62 ist somit, betrachtet man die Figur 4, an der Unterseite des Gabelkopfs 64 größer als an der Vorderseite des Gabelkopfs 64. Dadurch erreicht man, dass der Exzenterhebel 66 in seiner gespannten Stellung, in der er sich entlang des Rohrs 38 erstreckt, wie in den Figuren 1 bis 4 dargestellt, die Mutter 70 gegen das Gelenkelement 46 zieht und die Tellerfeder 72 vorspannt. Auf diese Weise wird das Gelenk 22 arretiert, da die aneinander anliegenden Flächen der Gelenkelemente (42, 46) in einen derart geringen Abstand voneinander gebracht werden, der es nicht ermöglicht, die Erhebung 54 aus der jeweiligen Vertiefung 52 herauszubewegen.

Wird der Exzenterhebel 66 aus dieser Position von Hand um 90° nach oben geschwenkt, kommt die Öffnung 62 aufgrund der Exzentrizität der Fläche 78 näher an die Unterlegscheibe 76, so dass die Tellerfedern 72, 74 entspannt werden. In dieser Stellung des Exzenterhebels kann die Erhebung 54 aus der jeweiligen Vertiefung 52 herausbewegt werden, so dass der Halmteiler 20 manuell um die Schwenkachse 24 von der Transportin die Betriebsposition oder umgekehrt verschwenkt werden kann. Die Erhebung 54 gelangt dann in die ihr benachbarte Vertiefung 52. Durch ein Herunterklappen des Exzenterhebels 66 wird das Gelenk wieder arretiert.

Der Exzenterhebel 66 erstreckt sich bei einem in der Betriebsposition arretierten Halmteiler 30 vom Gelenk 22 in der Fahrtrichtung nach hinten, so dass sich nur wenig Erntegut an ihm verfangen kann. Auch die übrigen Elemente des Gelenks 22 haben ein nur wenig - und seitlich überhaupt nicht - über die Rohre 36, 38 überstehendes Profil.

## Patentansprüche

1. Halmteiler (20) für eine Erntegutbergungsvorrichtung (10), mit einem Abweiser (30), der mittels eines Gelenks (22), das zwei zueinander bewegliche Gelenkelemente (42, 46) aufweist und durch eine Arretierungseinrichtung arretierbar ist, um eine Schwenkachse (24) verschwenkbar ist, **dadurch gekennzeichnet, dass** die Arretierungseinrichtung eine in Richtung der Schwenkachse (24) wirkende Kraft auf die Gelenkelemente (42, 46) ausübt.

2. Halmteiler (20) nach Anspruch 1, **dadurch gekennzeichnet, dass** die Arretierungseinrichtung einen Exzenterhebel (66) umfasst.

3. Halmteiler (20) nach Anspruch 2, **dadurch gekennzeichnet, dass** sich der Exzenterhebel (66) in einer Betriebsstellung des Halmteilers (20) oberhalb der Schwenkachse (24) und von dort entgegen der Fahrtrichtung nach hinten erstreckt.

4. Halmteiler (20) für eine Erntegutbergungsvorrichtung (10), insbesondere nach einem der Ansprüche 1 bis 3, mit einem Abweiser (30), der mittels eines Gelenks (22), das zwei zueinander bewegliche Gelenkelemente (42, 46) aufweist, um eine Schwenkachse (24) verschwenkbar ist, wobei die Gelenkelemente (42, 46) mit zusammenwirkenden Positionsvorgabeelementen versehen sind, die das Gelenk (22) in eine Position vorspannen, aus der es manuell verschwenkbar ist, **dadurch gekennzeichnet, dass** die Positionsvorgabeelemente zwischen den Gelenkelementen (42, 46) angeordnet sind.

5. Halmteiler (48) nach Anspruch 4, **dadurch gekennzeichnet, dass** die Positionsvorgabeelemente an sich quer zur Schwenkachse (24) erstreckenden Flächen der Gelenkelemente (42, 46) angeordnet sind.

6. Halmteiler nach Anspruch 4 oder 5, **dadurch gekennzeichnet, dass** die Positionsvorgabeelemente mindestens eine zusammenpassende Erhebung (54) und Vertiefung (52) umfassen, die jeweils an einem der Gelenkelemente (42, 46) angeordnet sind.

7. Halmteiler (48) nach einem der Ansprüche 4 bis 6, **dadurch gekennzeichnet, dass** ein Gelenkelement (42, 46) mehrere Positionsvorgabeelemente umfasst, so dass das Gelenk (22) in mindestens zwei Positionen vorspannbar ist.

8. Halmteiler (20) nach einem der Ansprüche 4 bis 7, **dadurch gekennzeichnet, dass** die beiden Gelenkelemente (42, 46) gleichartig sind.

9. Halmteiler (20) nach einem der Ansprüche 4 bis 8, **dadurch gekennzeichnet, dass** die Positionsvorgabeelemente bei arretierter Arretierungsvorrichtung ein Verschwenken des Gelenks (22) um die Schwenkachse (24) unterbinden.
